# EUROPÄISCHE PATENTSCHRIFT

(11) **EP 0 820 587 B1**
(45) Veröffentlichungstag und Bekanntmachung des Hinweises auf die Patenterteilung: **29.12.2004**
(21) Anmeldenummer: 96945534.4
(22) Anmeldetag: 25.10.1996
(51) Int. Cl.: G01N 27/407

(54) **Dichtungsanordnung in einem Messfühler**
Sealing arrangement in a sensing device
Garniture d'étanchéité dans un capteur

(30) Priorität: 14.02.1996 DE 19605290
(43) Veröffentlichungstag der Anmeldung: 28.01.1998
(73) Patentinhaber: ROBERT BOSCH GMBH, 70442 Stuttgart (DE)
(72) Erfinder: WEYL, Helmut, D-71701 Schwieberdingen (DE); FRIES, Romuald, D-71287 Weissach (DE); PELZ, Frank, D-73730 Esslingen (DE)
(86) Internationale Anmeldenummer: PCT/DE1996/002041
(87) Internationale Veröffentlichungsnummer: WO 1997/030345

(56) Entgegenhaltungen:
- EP-A- 0 087 626
- EP-A- 0 398 579
- WO-A-92/08127
- DE-A- 4 318 789

## Beschreibung

### Stand der Technik

Die Erfindung betrifft einen Meßfühler, insbesondere zur Bestimmung des Sauerstoffgehaltes in Abgasen von Verbrennungsmotoren nach dem Oberbegriff der unabhängigen Ansprüche.

Aus der DE-OS 41 26 378 ist ein Meßfühler bekannt, bei dem ein planares Sensorelement in einer Längsbohrung eines Gehäuses mittels einer Dichtung fixiert ist, wobei die Dichtung zwischen zwei Keramikformteile angeordnet ist. Die Keramikformteile bestehen aus Al₂O₃. Als Dichtung wird ein vorgesinterter Steatit-Formkörper verwendet, der bei der Montage des Meßfühlers durch Aufbringen eines Drucks auf eines der beiden Keramikformteile verformt wird und dabei sich an den Umfang des Sensorelements gasdicht anlegt.

Bei der Montage des Sensorelements im Gehäuse des Meßfühlers tritt das Problem auf, daß das Sensorelement in den Langlöchern der Keramikformteile und des Dichtkörpers nicht arretierbar ist und daß durch gegenseitiges Verdrehen der Keramikformteile beziehungsweise des Dichtkörpers zu den Keramikformteilen beim Verpressen des Dichtkörpers das Sensorelement von den harten Kanten der Keramikformteile beschädigt wird beziehungsweise zerstört werden kann.

Den Erfindungen liegt die Aufgabe zugrunde, die Montage des Sensorelements beim Einsetzen in das Gehäuse des Meßfühlers zu vereinfachen sowie die Fertigungssicherheit und Fertigungsqualität zu erhöhen.

### Vorteile der Erfindung

Die erfindungsgemäßen Meßfühler gemäß Anspruch 1 mit den kennzeichnenden Merkmalen der unabhängigen Ansprüche haben den Vorteil, daß die Montage des Meßfühlers beim Einsetzen des Sensorelements in das Gehäuse vereinfacht und gleichzeitig die Fertigungssicherheit und die Fertigungsqualität des Meßfühlers verbessert wird. Die Erfindung gemäß Anspruch 1 führt dazu, daß die als Langlöcher ausgeführten Durchgangslöcher der Keramikformteilen und des Dichtkörpers bei der Montage zwangsläufig eine radiale Ausrichtung erfahren, so daß die Kanten der Keramikformteile beim Verpressen nicht das Sensorelement beschädigen beziehungsweise zu Bruch bringen können. Eine besonders hohe Fertigungssicherheit und Montageerleichterung liegt vor, wenn die Erfindungen von Anspruch 1 und Anspruch 4 in Kombination eingesetzt werden. Die Erfindung gemäß unter anspruch 4 bewirkt, daß das Sensorelement im Dichtkörper arretiert wird, so daß das Sensorelement beim Einsetzen in das Gehäuse seine axiale Einbauposition beibehält.

Durch die in den Unteransprüchen aufgeführten Maßnahmen sind vorteilhafte Weiterbildungen und Verbesserungen der in den Hauptansprüchen angegebenen Meßfühlers möglich. Dies betrifft insbesondere die Ausführung der den Querschnitt der Langlöcher verengenden Anformungen, wodurch das Sensorelement sowohl schonend als auch relativ fest im Dichtkörper arretiert wird. Besonders vorteilhaft ist ebenfalls, die formschlüssigen Mittel zum radialen Ausrichten rechtwinklig zur Längsseite der Langlöcher auszubilden.

### Zeichnung

Zwei Ausführungsbeispiele der Erfindung sind in der Zeichnung dargestellt und in der nachfolgenden Beschreibung näher erläutert. Es zeigen Figur 1 einen meßgasseitigen Teil eines Meßfühlers im Querschnitt, Figur 2a eine stirnseitige Ansicht eines meßgasseitigen Keramikformteils, Figur 2b ein Schnitt durch das Keramikformteil gemäß Figur 2a nach der Linie II-II, 3a eine stirnseitige Ansicht eines Dichtkörpers gemäß einem ersten Ausführungsbeispiel, Figur 3b eine Schnittdarstellung durch den Dichtkörper gemäß Figur 3a nach der Linie III-III, Figur 3c eine stirnseitige Ansicht eines Dichtkörpers gemäß einem zweiten Ausführungsbeispiel, Figur 4a eine stirnseitige Ansicht eines anschlußseitigen Keramikformteils und Figur 4b eine Schnittdarstellung durch das Keramikformteil gemäß Figur 4a nach der Linie IV-IV.

### Ausführungsbeispiele

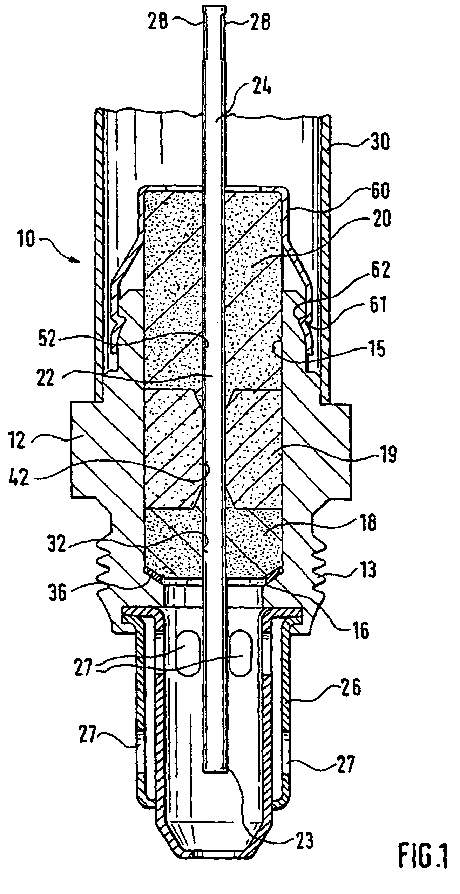

Figur 1 zeigt einen meßgasseitigen Abschnitt eines Gassensors 10, beispielsweise einen elektrochemischen Sauerstoffsensor, der ein metallisches Gehäuse 12 hat, das ein Gewinde 13 als Befestigungsmittel für den Einbau in ein nicht dargestelltes Meßgasrohr aufweist. Das Gehäuse 12 hat eine Längsbohrung 15 mit einer schulterförmigen Ringfläche 16. In der Längsbohrung 15 ist ein meßgasseitiges Keramikformteil 18, eine Dichtung 19 und ein anschlußseitiges Keramikformteil 20 angeordnet. Durch die Keramikformteile 18, 20 und die Dichtung 19 erstreckt sich ein planares Sensorelement 22 mit einem meßgasseitigen Abschnitt 23 und einem anschlußseitigen Abschnitt 24.

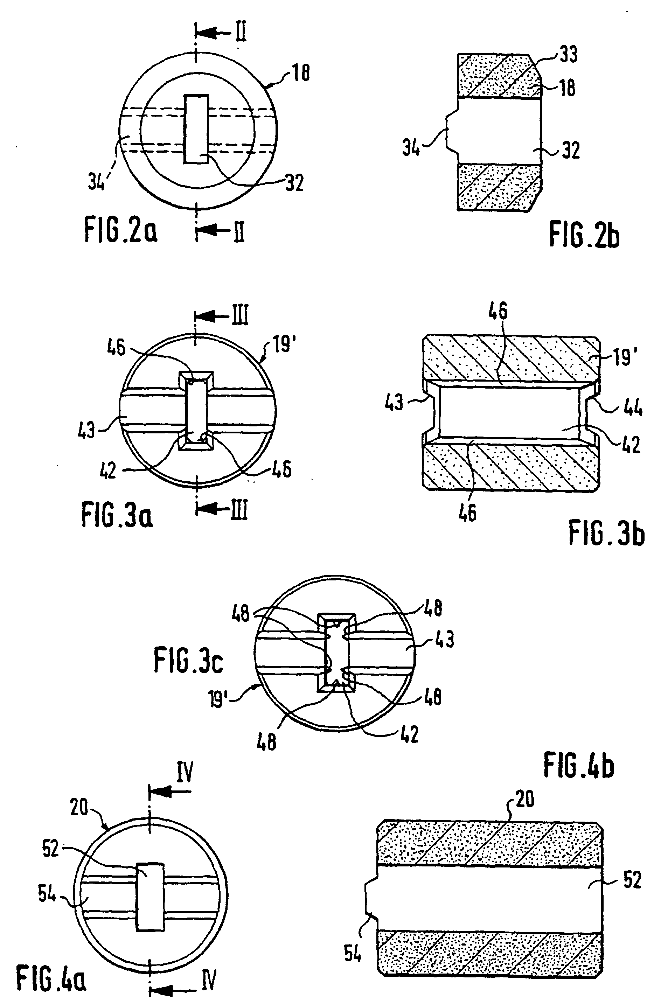

Die Keramikformteile 18 und 20 bestehen aus einer elektrisch isolierenden Keramik, beispielsweise Al₂O₃. Die Dichtung 19 besteht aus Steatit oder Bornitrid. Die Dichtung 19 erhält vor dem Einbau in die Längsbohrung 15 des Gehäuses 12 eine Preform, die durch Pressen von Steatitpulver oder Bornitridpulver zu einem Dichtkörper 19' erzeugt wird (Figuren 3a, 3b, 3c). Die Keramikformteile 18, 20 weisen eine wesentlich höhere Härte auf als der Dichtkörper 19' und sind nicht verformbar.

Der meßgasseitige Abschnitt 23 des Sensorelements 22 ragt aus dem Gehäuse 11 heraus und ist von einem Schutzrohr 26 umgeben, das am Gehäuse 12 festgelegt ist. Das Schutzrohr 26 weist Ein- und Austrittsöffnungen 27 für das zu messende Gas auf.

Der anschlußseitige Abschnitt 24 besitzt Anschlußkontakte 28, die ebenfalls aus dem Gehäuse 12 herausragen. Die Anschlußkontakte 28 werden mit einem nicht dargestellten, mit Anschlußkabel versehenen Kontaktstecker kontaktiert. Der aus dem Gehäuse 12 herausragende anschlußseitige Abschnitt 24 ist von einer metallischen Hülse 30 umgeben, die mit dem Gehäuse 12 gasdicht verschweißt ist. Die Hülse 30 schützt den anschlußseitigen Abschnitt 24 vor Umgebungseinflüssen und weist eine nicht dargestellte Öffnung auf, durch die die Anschlußkabel nach außen geführt werden. Die Öffnung ist in an sich bekannter Weise mittels einer Kabeldurchführung verschlossen.

Das meßgasseitige Keramikformteil 18 ist gemäß Figur 2a und Figur 2b zylindrig ausgebildet und hat ein achssymmetrisch verlaufendes Durchgangsloch 32, welches beispielsweise einen rechteckförmigen Querschnitt aufweist, der zum Durchführen des planaren Sensorelements 22 geeignet ist. Das Keramikformteil 18 ist an der meßgasseitigen Stirnfläche mit einer Schräge 33 und an der gegenüberliegenden Stirnseite mit einem beispielsweise trapezförmig aus der Stirnfläche vorstehenden Vorsprung 34 versehen. Der Vorsprung 34 verläuft über den gesamten Durchmesser des zylindrigen Keramikformteils und erstreckt sich rechtwinklig zu der großen Seitenlänge des rechteckigen Durchgangslochs 32. Die Schräge 33 des Keramikformteils 18 sitzt auf einem auf der Ringfläche 16 des Gehäuses 12 aufliegenden metallischen Dichtring 36 auf.

Die Figuren 3a, 3b und 3c zeigen den Dichtkörper 19' vor dem Einbau in die Längsbohrung 15 des Gehäuses 12. Der Dichtkörper 19' hat ebenfalls ein achssymmetrisch verlaufendes Durchgangsloch 42 mit einem rechteckigen Querschnitt. Der Dichtkörper 19' besitzt ferner an der einen Stirnseite eine erste Einformung 43 und an der anderen Stirnseite eine zweite Einformung 44. Die Einformungen 43, 44 erstrecken sich jeweils über den Durchmesser des Dichtkörpers 19' und verlaufen ebenfalls rechtwinklig zur großen Seitenlänge des rechteckigen Durchgangslochs 42.

Im rechteckigen Durchgangsloch 42 des Dichtkörpers 19' sind Fixiermittel für des Sensorelement 22 angeform, die den Querschitt des Durchgangslochs 42 an bestimmten Stellen verengen. Gemäß einem ersten Ausführungsbeispiel sind die Fixiermittel als in den vier Innenkanten des rechteckigen Durchgangslochs 42 angeformte Fasen 46 ausgeführt. Die Abmessung des rechteckigen Durchgangslochs 42 und der Fasen 46 ist so ausgebildet, daß das fertig gesinterte planare Sensorelement 22, das ein harter und spröder Keramikkörper ist, durch das Durchgangsloch 42 mit geringer Kraftaufwendung gedrückt werden kann, wobei die Kanten des Sensorelements 22 die Fasen 46 verformen beziehungsweise abschaben, so daß das Sensorelement 22 im Durchgangsloch 42 arretiert wird.

Ein zweites Ausführungsbeispiel zur Ausbildung der Fixiermittel geht aus Figur 3c hervor. Dort sind an den Innenflächen des Durchgangslochs 32 sich gegenüberliegende zahnförmige Vorsprünge 48 angeformt. Die zahnförmigen Vorsprünge 48 sind, wie die Fasen 46 des ersten Ausführungsbeispiels, derart ausgebildet, daß das Sensorelement 22 beim Einsetzen unter leichtem Druck die Vorsprünge 48 abschabt beziehungsweise verformt und dadurch in dem Durchgangsloch 42 fixiert wird.

Auch das anschlußseitige Keramikformteil 20 hat gemäß Figur 4a und Figur 4b ein achssymmetrisch verlaufendes Durchgangsloch 52 mit einem rechteckigen Querschnitt. Das Keramikformteil 20 hat ferner an einer Stirnseite einen beispielsweise trapezförmig ausgebildeten Vorsprung 54, der sich über den Durchmesser des Keramikformteils erstreckt und rechtwinklig zur großen Seitenlänge des rechteckigen Durchgangslochs 52 verläuft.

Bei der Montage des Meßfühlers 10 wird zunächst der Dichtring 36 auf die Ringfläche 16 des Gehäuses 12 gelegt. Danach wird das meßgasseitige Keramikformteil 18 auf den Dichtring 36 gesetzt. Auf das Keramikformteil 18 wird der Dichtkörper 19' aufgesetzt, wobei der aus der Stirnfläche des Keramikformteils 18 herausragende Vorsprung 34 in die eine Einformung 43 eingreift. Durch das Durchgangsloch 42 wird unter geringer Kraftaufwendung das Sensorelement 22 geschoben. Dabei werden, wie bereits beschrieben, die Fasen 46 beziehungsweise zahnförmigen Vorspünge 48 verformt und das Sensorelement 22 in der geforderten Einbauposition arretiert. Über das anschlußseitige Ende 24 des Sensorelements 22 wird nun das anschlußseitige Keramikformteil 20 geführt und auf den Dichtkörper 19 aufgesetzt. Dabei greift der am Keramikformteil 20 ausgebildete Vorsprung 54 in die Einformung 44 des Dichtkörpers 19' ein.

Es ist jedoch auch denkbar, das Sensorelement außerhalb des Gehäuses mit dem Dichtkörper zu verbinden und dann das Sensorelement 22 mit dem Dichtkörper 19 auf das meßgasseitige Keramikformteil 18 aufzusetzen. Andererseits ist es auch möglich, auf den eingesetzten Dichtkörper 19' zunächst das anschlußseitige Keramikformteil 20 aufzusetzen. Durch die Vorsprünge 34, 54 und die Einformungen 43, 44 erhalten die Durchgangslöcher 32, 42, 52 eine deckungsgleiche radiale Lage, so daß anschließend das Sensorelement 22 problemlos durch die Durchgangslöcher 52, 42 und 32 unter geringer Druckaufwendung geschoben werden kann.

Nachdem das Sensorelement 22 seine Einbauposition erhalten hat, wird auf das aus dem Gehäuse 12 herausragende anschlußseitige Keramikformteil 20 eine Druckhülse 60 mit beispielsweise mehreren, gleichmäßig verteilten und nach innen weisenden Krallen 61 aufgesetzt, die in am Gehäuse angeformten Einkerbungen 62 eingreifen.

Im Ausgangszustand befindet sich der Dichtkörper 19' in der Längsbohrung 15 des Gehäuses 12 zwischen den beiden Keramikformteilen 18 und 20. Mit der Druckhülse 60 wird nun auf das anschlußseitige Keramikformteil 20 eine Druckkraft aufgebracht, die auf den Dichtkörper 19' übertragen wird. Die Druckkraft ist so bemessen, daß der gepreßte Dichtkörper 19' zerdrückt wird und sich die Pulverbestandteile sowohl an der Längsbohrung 15 des Gehäuses 12 als auch am Sensorelement 22 andrücken. Durch das Verformen des Dichtkörpers 19' entsteht somit die gasund benzindichte Dichtung 19 im Gehäuse 22.

## Patentansprüche

1. Meßfühler, insbesondere zur Bestimmung des Sauerstoffgehaltes in Abgasen von Verbrennungsmotoren mit einem Sensorelement welches in einem Gehäuse von einer Dichtung gasdicht umfaßt und fixiert ist, wobei die Dichtung als verformbarer Dichtkörper im Gehäuse eingesetzt ist, der zwischen mindestens einem meßgasseitigen und mindestens einem anschlußseitigen Keramikformteil angeordnet ist, und wobei der Dichtkörper und die Keramikformteile jeweils ein axial verlaufendes Durchgangsloch zur Aufnahme des Sensorelements aufweisen, **dadurch gekennzeichnet, daß** das meßgasseitige Keramikformteil (18), das anschlußseitige Keramikformteil (20) und der Dichtkörper (19') an den sich gegenseitig berührenden Stirnflächen jeweils ineinandergreifende formschlüssige Eingriffselemente (34, 43, 44, 54) aufweisen und daß die formschlüssigen Eingriffselemente (34, 43, 44, 54) bezüglich der Durchgangslöcher (32, 42, 52) derart radial ausgerichtet sind, daß die Durchgangslöcher (32, 42, 52) fluchtend zueinander verlaufen.

2. Meßfühler nach Anspruch 1, **dadurch gekennzeichnet, daß** die Durchgangslöcher (32, 42, 52) einen rechteckigen Querschnitt aufweisen und daß die formschlüssigen Eingriffselemente (34, 43, 44, 54) jeweils rechtwinklig zur langen Seitenlänge der rechteckigen Durchgangslöcher (32, 42, 52) und symmetrisch zu einer durch den Mittelpunkt des Querschnitts verlaufenden Ebene angeordnet sind.

3. Meßfühler nach Anspruch 1 oder 2, **dadurch gekennzeichnet, daß** am meßgasseitigen Keramikformteil (18) und am anschlußseitigen Keramikformteil (20) die formschlüssigen Eingriffselement als über die Stirnfläche verlaufende Vorsprünge (34, 54) ausgebildet sind und daß am Dichtkörper (19') entsprechende Einformungen (43, 44) vorgesehen sind, in denen der jeweilige Vorsprung (34,54) einzugreifen vermag.

4. Meßfühler nach einem der vorhergehenden Ansprüche, **dadurch gekennzeichnet, daß** der Dichtkörper (19') den Querschnitt des Durchgangslochs (42) verengende Anformungen (46, 48) aufweist die beim Einsetzen des Sensorelements (22) derart verformbar sind, daß das Sensorelement (22) zumindest von den Anformungen (46, 48) im Durchgangsloch (42) arretierbar ist.

5. Meßfühler nach Anspruch 4, **dadurch gekennzeichnet, daß** das Durchgangsloch (42) einen rechteckigen Querschnitt aufweist und daß die den Querschnitt verengenden Anformungen in den Kanten des Durchgangslochs (42) angeformte Fasen (46) sind.

6. Meßfühler nach Anspruch 4, **dadurch gekennzeichnet, daß** das Durchgangsloch (42) einen rechteckigen Querschnitt aufweist und daß die den Querschnitt verengenden Anformungen als gegenüberliegende zahnförmige Vorsprünge (48) ausgebildet sind.

7. Meßfühler nach Anspruch 4, 5 oder 6, **dadurch gekennzeichnet, daß** die Anformungen (46, 48) eine geringere Härte als das Sensorelement (22) aufweisen.

8. Meßfühler gemäß Anspruch 1, **dadurch gekennzeichnet, daß** der Dichtkörper (19') den Querschnitt des Durchgangslochs (42) verengende Anformungen (46, 48) aufweist, die beim Einsetzen des Sensorelements (22) derart verformbar sind, daß das Sensorelement (22) zumindest von den Anformungen (46, 48) im Durchgangsloch (42) arretierbar ist.

## Claims

1. Measuring sensor, in particular for determining the oxygen content in exhaust gases of internal combustion engines, having a sensor element which is surrounded in a gastight manner by a seal and fixed in a housing, the seal being inserted in the housing as a deformable sealing body which is arranged between at least one ceramic moulded part on the measuring gas side and at least one ceramic moulded part on the connection side, and the sealing body and the ceramic moulded parts respectively having an axially extending through-hole for receiving the sensor element, **characterized in that** the ceramic moulded part (18) on the measuring gas side, the ceramic moulded part (20) on the connection side and the sealing body (19') respectively have on the end faces that contact one another interengaging positive engagement elements (34, 43, 44, 54) and **in that** the positive engagement elements (34, 43, 44, 54) are radially aligned with respect to the through-holes (32, 42, 52) in such a way that the through-holes (32, 42, 52) are in line with one another.

2. Measuring sensor according to Claim 1, **characterized in that** the through-holes (32, 42, 52) have a rectangular cross section and **in that** the positive engagement elements (34, 43, 44, 54) are respectively arranged at right angles in relation to the long side length of the rectangular through-holes (32, 42, 52) and symmetrically in relation to a plane extending through the centre point of the cross section.

3. Measuring sensor according to Claim 1 or 2, **characterized in that**, on the ceramic moulded part (18) on the measuring gas side and on the ceramic moulded part (20) on the connection side, the positive engagement elements are formed as proj ections (34, 54) extending beyond the end face and **in that** corresponding formed-in recesses (43, 44) in which the respective projection (34, 54) is able to engage are provided on the sealing body (19') .

4. Measuring sensor according to one of the preceding claims, **characterized in that** the sealing body (19') has formed-on structures (46, 48), which constrict the cross section of the through-hole (42) and, when the sensor element (22) is inserted, are deformable in such a way that the sensor element (22) can be arrested in the through-hole (42) at least by the formed-on structures (46, 48).

5. Measuring sensor according to Claim 4, **characterized in that** the through-hole (42) has a rectangular cross section and **in that** the formed-on structures constricting the cross section are chamfers (46) formed onto the edges of the through-hole (42).

6. Measuring sensor according to Claim 4, **characterized in that** the through-hole (42) has a rectangular cross section and **in that** the formed-on structures constricting the cross section are formed as opposed tooth-shaped projections (48).

7. Measuring sensor according to Claim 4, 5 or 6, **characterized in that** the formed-on structures (46, 48) have a lower hardness than the sensor element (22).

8. Measuring sensor according to Claim 1, **characterized in that** the sealing body (19') has formed-on structures (46, 48) which constrict the cross section of the through-hole (42) and, when the sensor element (22) is inserted, are deformable in such a way that the sensor element (22) can be arrested in the through-hole (42) at least by the formed-on structures (46, 48).

## Revendications

1. Capteur de mesure, en particulier pour la détermination de la teneur en oxygène dans des gaz d'échappement de moteurs à combustion interne, comportant un élément de détection entouré et fixé dans un boîtier par un élément d'étanchéité monté dans le boîtier en tant que corps d'étanchéité déformable entre au moins une pièce moulée en céramique située du côté du gaz mesuré et au moins une pièce moulée en céramique située du côté du raccordement, le corps d'étanchéité et les pièces moulées en céramique présentant respectivement un alésage traversant servant au logement de l'élément de détection,
**caractérisé en ce que**
la pièce moulée en céramique située du côté du gaz mesuré (18), la pièce moulée en céramique située du côté du raccordement (20) et le corps d'étanchéité (19') présentent au niveau des surfaces frontales situées les unes en face des autres et en contact les unes avec les autres respectivement des éléments d'engrènement à combinaison de formes (34, 43, 44, 54) qui s'engrènent les uns dans les autres, et les éléments d'engrènement à combinaison de formes (34, 43, 44, 54) sont orientés radialement par rapport aux alésages traversants (32, 42, 52) de telle sorte que les alésages traversants (32, 42, 52) s'étendent de façon alignée les uns par rapport aux autres.

2. Capteur de mesure selon la revendication 1,
**caractérisé en ce que**
les alésages traversants (32, 42, 52) présentent une section transversale rectangulaire et les éléments d'engrènement à combinaison de formes (34, 43, 44, 54) sont disposés respectivement perpendiculairement par rapport à la longueur latérale longue des alésages traversants rectangulaires (32, 42, 52) et de façon symétrique par rapport à un plan s'étendant à travers le point médian de la section transversale.

3. Capteur de mesure selon la revendication 1 ou 2,
**caractérisé en ce qu'**
au niveau de la pièce moulée en céramique située du côté du gaz mesuré (18) et au niveau de la pièce moulée en céramique située du côté du raccordement (20), les éléments d'engrènement à combinaison de formes sont sous forme de saillies (34, 54) s'étendant au-dessus de la face frontale, et au niveau du corps d'étanchéité (19') sont prévues des formes (43, 44) appropriées dans lesquelles peut s'engrener la saillie (34, 54) respective.

4. Capteur de mesure selon l'une des revendications précédentes,
**caractérisé en ce que**
le corps d'étanchéité (19') présente des déformations (46, 48) rétrécissant la section transversale de l'alésage traversant (42) et qui, lors de la mise en place de l'élément de détection (22), sont déformables de telle sorte que l'élément de détection (22) peut être bloqué au moins par les déformations (46, 48) dans l'alésage traversant (42).

5. Capteur de mesure selon la revendication 4,
**caractérisé en ce que**
l'alésage traversant (42) présente une section transversale rectangulaire, et les déformations rétrécissant la section transversale sont des chanfreins (46) formés dans les arêtes de l'alésage traversant (42).

6. Capteur de mesure selon la revendication 4,
**caractérisé en ce que**
l'alésage traversant (42) présente une section transversale rectangulaire, et les déformations rétrécissant la section transversale sont configurées sous forme de saillies en forme de dents (48) situées les unes en face des autres.

7. Capteur de mesure selon la revendication 4, 5 ou 6,
**caractérisé en ce que**
les déformations (46, 48) présentent une dureté inférieure à celle de l'élément de détection (22).

8. Capteur de mesure selon la revendication 1,
**caractérisé en ce que**
le corps d'étanchéité (19') présente des déformations (46, 48) rétrécissant la section transversale de l'alésage traversant (42) et qui, lors de la mise en place de l'élément de détection (22), sont déformables de telle sorte que l'élément de détection (22) peut être bloqué au moins par les déformations (46, 48) dans l'alésage traversant (42).
